# EUROPEAN PATENT APPLICATION

(11) **EP 4 360 778 A1**
(43) Date of publication of application: **01.05.2024**
(21) Application number: 22828142.4
(22) Date of filing: 26.05.2022
(51) Int. Cl.: B22F 3/14, B22F 3/11, B22F 3/18, H01M 4/64, H01M 4/66

(54) **TITANIUM POROUS BODY AND TITANIUM POROUS BODY MANUFACTURING METHOD**

(30) Priority: 25.06.2021 JP 2021105985
(71) Applicant: Toho Titanium CO., LTD., Chigasaki-shi Kanagawa 253-8510 (JP)
(72) Inventor: INOUE,Yosuke, Chigasaki-shi, Kanagawa 253-8510 (JP)
(74) Representative: Mewburn Ellis LLP
(86) International application number: PCT/JP2022/021613
(87) International publication number: WO 2022/270223

(57) **Abstract**

The titanium porous body according to the present invention is in a form of a sheet, wherein the titanium porous body has a ratio of an electrical conductivity (kS/cm) to a relative density (-) of 8.0 kS/cm or more, and has a ratio of an air resistance (s) to a thickness (mm) of 8.0 s/mm or less.

## Description

### [Technical Field]

The present invention relates to a porous titanium body in a form of a sheet, and a method for producing the porous titanium body.

### [Background Art]

Metal porous bodies produced by sintering metal fibers are used for batteries and other various applications.

For example, Patent Literature 1 describes "a metal fiber porous body for battery electrode substrates, wherein metal fibers are entangled, and the entangled metal fibers are directly bonded to each other to form a skeleton surrounding pores, thereby forming a porous fiber structure or a three-dimensional network structure". Also, as a method for producing the same, Patent Literature 1 discloses "a method for producing a metal fiber porous body for battery electrode substrates, the method comprising placing a web made of metal fibers on a support; injecting a fluid at a high pressure and at a high speed onto the web to form a sheet in which the metal fibers are three-dimensionally entangled; and then heating the metal fiber entangled sheet at a temperature less than or equal to a melting point of the metal fibers under pressure to fuse intersection points of the metal fibers".

### [Citation List]

### [Patent Literature]

[PTL 1]
Japanese Patent Application Publication No. H09-143510 A

### [Summary of Invention]

### [Technical Problem]

Among metal porous bodies, titanium porous bodies mainly made of titanium are being considered for use as PTLs (porous transport layers) and the like, which are in environments where PEM water electrolyzing devices may be corroded, because of the excellent corrosion resistance and electrical conductivity of titanium.

In such applications, there may be a need for a titanium porous body in a form of a sheet, which has not only corrosion resistance and electrical conductivity but also air permeability or liquid permeability that allows at least one of a gas and a liquid to pass in the thickness direction satisfactorily. The titanium porous body that is excellent in at least one of air permeability and liquid permeability may be suitably used for the applications as described above.

However, if the relative density of the titanium porous material is lowered for the purpose of increasing the air permeability or the liquid permeability, the electrical conduction property will decrease because of increased voids, and requirements for electrical properties will no longer be satisfied. Therefore, until now, it has been difficult to achieve both the electrical conductive property and the air permeability or liquid permeability, which are contradictory, at a higher level.

Patent Literature 1 does not consider any specific conditions for improving both the electrical conductive property and the air permeability or liquid permeability of a titanium porous body among metal porous bodies.

An object of the present invention is to provide a titanium porous body having a relatively high electrical conductive property and air permeability or liquid permeability, and a method for producing the titanium porous body.

### [Solution to Problem]

As a result of intensive studies, the inventors of the present invention have found that a porous body having a high electrical conductive property and air permeability or liquid permeability can be produced by subjecting titanium fibers to a predetermined first sintering step, a warm rolling step, and a second sintering step.

More specifically, after the titanium fibers are sintered to some extent to form a titanium sintered body in the first sintering step, the warm rolling step is performed. Here, it is believed that by performing the warm rolling rather than cold rolling, the plastic deformation of the titanium fibers making up the titanium sintered body tends to progress, which would generate phenomenon where the number of contact points between the titanium fibers increases, or the contact points become larger. It should be noted that the warm rolling may produce a newly formed surface of titanium, but since the warm rolling is performed in a nitrogen atmosphere, the newly formed surface is covered with a thin titanium nitride film even if the newly formed surface of titanium is generated. Therefore, the formation of a titanium oxide film during cooling after the warm rolling is suppressed, and as a result, an increase in an oxygen content in titanium is suppressed. In the subsequent second sintering step, sintering of the titanium fibers would progress at contact points that have increased or become large due to the warm rolling, and bonded portions that have already been formed in the first sintering step would become further large as the sintering progresses. It is presumed that this allows the electrical conductive property to be improved without sacrificing the air permeability of the titanium porous body. However, the present invention is not limited to such theory.

In addition, the warm rolling step should be performed in a nitrogen atmosphere in order to suppress oxidation of the titanium sintered body and to prevent the titanium sintered body from sticking to the rolling mill rolls on the newly formed surface generated by rolling. When the warm rolling is performed in the nitrogen atmosphere, a thin titanium nitride film may be formed on the titanium sintered body, and the titanium nitride film functions to prevent the titanium sintered body from sticking to the rolling mill roll. The titanium nitride film is difficult to grow, and it is considered that nitrogen diffuses inside and disappears during sintering which is separately performed, so that an unintended increase in the nitrogen content of the titanium porous body can be suppressed.

The titanium porous body according to the present invention is in a form of a sheet, wherein the titanium porous body has a ratio of an electrical conductivity (kS/cm) to a relative density (-) of 8.0 kS/cm or more, and has a ratio of an air resistance (s) to a thickness (mm) of 8.0 s/mm or less.

The titanium porous body as described above preferably has an oxygen content of 0.15% by mass to 0.50% by mass. The titanium porous body as described above preferably has a nitrogen content of 0.02% by mass to 0.15% by mass.

The titanium porous body as described above can have a thickness of 0.2 mm to 4.0 mm.

The titanium porous body as described above preferably has a relative density of 0.05 to 0.50.

The method for producing a titanium porous body according to the present invention is a method for producing a titanium porous body in a form of a sheet, the method comprising: a first sintering step of heating deposits of titanium fibers in a vacuum or an inert atmosphere at a temperature of 900°C or more for at least one hour to obtain a titanium sintered body; a warm rolling step of subjecting the titanium sintered body to warm rolling in a nitrogen atmosphere; and after the warm rolling step, a second sintering step of heating the titanium sintered body in a vacuum or an inert atmosphere at a temperature of 900°C or more for at least one hour.

Preferably, the method further comprises a dry deposition step of dry-depositing titanium fibers to form the deposits of the titanium fibers.

In the warm rolling step, the titanium sintered body can be subjected to warm rolling at a temperature in a range of 200°C to 400°C.

### [Advantageous Effects of Invention]

The titanium porous body according to the present invention has a relatively high electrical conductive property and air permeability or liquid permeability. According to the method for producing a porous titanium body of the present invention, such a porous titanium body can satisfactorily be produced.

### [Description of Embodiments]

Embodiments according to the present invention will be described below in detail.

The titanium porous body according to an embodiment of the present invention is in a form of a sheet, wherein the titanium porous body has a ratio of an electrical conductivity (kS/cm) to a relative density (-) of 8.0 kS/cm or more, and has a ratio of an air resistance (s) to a thickness (mm) of 8.0 s/mm or less.

Such a high electrical conductive property, air permeability or liquid permeability are achieved by subjecting raw material titanium fibers to a first sintering step, a warm rolling step and a second sintering step in this order during the production of the titanium porous body. According to one embodiment of the present invention, it is believed that by appropriately controlling the conditions of each step, the number of contact points between the titanium fibers used as raw materials can be appropriately increased, and bonded portions each having a desired size can be formed. The titanium porous body thus produced would be able to achieve the high electrical conductive property and air permeability or liquid permeability. In the first sintering step, the deposits of the titanium fibers are heated in a vacuum or an inert atmosphere at a temperature of 900°C or more for at least one hour. The titanium sintered body thus obtained is subjected to warm rolling in a nitrogen atmosphere in the warm rolling step. After the warm rolling step, the titanium sintered body is heated in a vacuum or an inert atmosphere at a temperature of 900°C or more for at least one hour in the second sintering step.

### (Composition)

The titanium porous body should be made of titanium. If it is made of titanium, a porous titanium body can be obtained that has a high electrical conductive property with a certain relative density and allows a gas to pass in the thickness direction satisfactorily. The Ti content of the titanium porous body is, for example, 99% by mass or more, preferably 99.3% by mass or more. Although it is desirable that the Ti content be higher, it may be 99.8% by mass or less.

The titanium porous body may contain Fe as an impurity, and the Fe content is, for example, 0.25% by mass or less. Further, the titanium porous body may contain Ni, Cr, Al, Cu, Zn, and Sn as inevitable impurities resulting from, for example, the production process. The content of each of Ni, Cr, Al, Cu, Zn, and Sn is preferably less than 0.10% by mass, and the total content thereof is preferably less than 0.30% by mass.

The oxygen content of the titanium porous body is preferably 0.15% by mass to 0.50% by mass, more preferably 0.15% by mass to 0.35% by mass. In the case of such a low oxygen content, the electrical conductivity becomes higher, so that the electrical conductive property is further improved. Further, by reducing the oxygen content, any damage due to embrittlement of the titanium porous body is suppressed.

The nitrogen content of the titanium porous body may be 0.02% by mass to 0.15% by mass. When producing the titanium porous body, a warm rolling step is performed in a nitrogen atmosphere as described below in detail, but a titanium nitride film that may be formed during that step would be mostly eliminated in the subsequent second sintering step. This allows the nitrogen content of the titanium porous body to be suppressed in the small range as described above. It should be noted that the carbon content of the titanium porous body is, for example, 0.02% by mass to 0.20% by mass, and further, for example, 0.02% by mass to 0.10% by mass.

The oxygen content as described above can be measured by inert gas fusion-infrared absorption spectrometry, the nitrogen content can be measured by an inert gas fusion-thermal conductivity method, and the carbon content can be measured by an infrared absorption method after combustion.

It should be noted that the titanium porous body may have a purity corresponding to pure titanium types 1 to 4, typically types 1 to 2, of JIS H 4600 (2012), except for the above oxygen content.

### (Relative Density and Conductivity)

In general, the titanium porous body tends to have a low electrical conductive property when the relative density is low. When the relative density of the titanium porous body is d (-, dimensionless) and the electrical conductivity is σ (kS/cm), the ratio σ/d of the electrical conductivity σ (kS/cm) to the relative density d (-) is 8.0 kS/cm or more. The titanium porous body having such a larger ratio σ/d of the conductivity σ to the relative density d can be evaluated as having improved electrical conductive property. In this case, power loss during electrolysis can be reduced when the titanium porous body is used as a PTL (porous transport layer) or the like of a PEM water electrolysis device.

Furthermore, the titanium porous body having the ratio σ/d of the electrical conductivity σ to the relative density d of 10 kS/cm or more can exert a further improved electrical conductive property. From the same viewpoint, the ratio σ/d is preferably 13 kS/cm or more. It should be noted that the ratio σ/d of the electrical conductivity σ to the relative density d may be, for example, 20 kS/cm or less.

The relative density of the titanium porous body is preferably 0.05 to 0.50, and more preferably 0.10 to 0.35. The relative density in this range can exhibit even better air permeability or liquid permeability while having the required high strength.

The above conductivity used is an average value of two measurements in total: one measurement in a rolling direction and one measurement in a direction perpendicular to the rolling direction at the center of the titanium porous body in the form of the sheet, using a low resistivity meter in accordance with JIS K7194, such as a low resistivity meter Loresta GP (MCP-T610) and probe (MCP-TP08P) from Nitto Seiko Analytech. To determine the relative density, a volume V is calculated from an area and a thickness of the titanium porous body in the form of the sheet. Furthermore, a mass M of the titanium porous body is measured, and an apparent density ρ (g/cm³) is determined as a ratio of the volume V and the mass M. The relative density (ρ/4.51) is calculated by dividing the apparent density ρ (g/cm³) by the true density of Ti, 4.51 g/cm³.

### (Thickness and Air Resistance)

The air permeability or liquid permeability in the thickness direction of the titanium porous body can vary depending on the thickness. When the thickness of the titanium porous body is t (mm), and an air resistance, which is a time required for allowing air having a volume of 300 mL to pass in the thickness direction, is T (s), a ratio T/t (s/mm) of the air resistance T(s) to the thickness t (mm) is 8.0 s/mm or less. If the ratio T/t of the air resistance T to the thickness t is 8.0 s/mm or less, it is believed that the requirements for air permeability and liquid permeability required for the predetermined applications can be satisfied. For example, the titanium porous body used as PTL in a PEM water electrolysis device improves the diffusion rate of oxygen and water, thereby making it easier for fluids such as water fed there to reach the electrodes, and making it easier for oxygen generated at the electrodes to be discharged to the outside. This increases an electrolysis efficiency.

The ratio T/t (s/mm) of the air resistance T(s) to the thickness t (mm) is preferably 5.0 s/mm or less. The ratio T/t (s/mm) is more preferably 4.0 s/mm or less, and even more preferably 3.5 s/mm or less. Although there is no particular preferable lower limit for the ratio T/t, it may be 1.0 s/mm or more, typically 2.0 s/mm or more.

The thickness of the titanium porous body in the form of the sheet is preferably 0.2 mm to 4.0 mm, more preferably 0.3 mm to 2.0 mm. By increasing the thickness to a certain extent, non-uniform diffusion of oxygen and water can be suppressed for applications in the PEM water electrolysis device, so that a decrease in electrolysis efficiency can be suppressed. It should be noted that the "a form of a sheet" for the titanium porous body means a plate shape or foil shape having a small thickness relative to the dimensions in a plane view, and the shape in the plane view is not particularly limited.

The thickness is measured at five points in total: four points on the periphery of the titanium porous body and one point in the center, using, for example, a digital thickness gauge which has a flat type gauge head with Φ10 mm and has a measurement accuracy of 0.001 to 0.01 mm, such as Mitutoyo digital thickness gauge (model number 547-321), and the thickness is defined as an average value of the measured values. When the titanium porous body in the form of the sheet has a rectangular shape in plane view, the four points on the periphery as described above are defined as four points on four corners.

The air resistance is measured according to the Gurley method, and herein a volume of air passing through the titanium porous body is 300 mL. Specifically, for example, using a Gurley densometer in accordance with ISO 5635-5, such as a Gurley densometer manufactured by Toyo Seiki Seisaku-sho, Ltd. (model: G-B3C), the time (s) required for passage of air with a measurement hole diameter of Φ6 mm and at a volume of the air of 300 mL. This time is defined as the air resistance.

### (Production Method)

To produce the titanium porous body as described above, for example, a first sintering step, a warm rolling step, and a second sintering step can be performed in this order on raw material titanium fibers. Prior to the first sintering step, a dry deposition step may be performed.

As the raw material titanium fibers, those containing mainly Ti are used so as to have the composition of the titanium porous body as described above. The titanium fibers are fibrous, and more specifically, the titanium fibers preferably have a fiber length of 1 mm to 10 mm and a fiber thickness of 0.01 mm to 0.10 mm.

To determine the fiber length and the fiber thickness, images of 30 arbitrary titanium fibers are taken using a scanning electron microscope (SEM). Then, on the image, a straight line distance between ends of the titanium fiber is defined as the fiber length, and a straight line distance of a width along a direction perpendicular to the fiber length at a midpoint between the ends is defined as the fiber thickness, and these are measured and an average value thereof is calculated. It should be noted that for titanium fibers that are bent in the middle, the shortest distance between the ends is defined as the fiber length. For titanium fibers that are branched into two or more branches, the straight line distance between the farthest ends is defined as the fiber length.

The titanium fibers can be produced, for example, by performing a coil cutting method, a chatter vibration cutting method, or the like on a titanium-containing lump or plate. In this case, it tends to obtain fibrous powder rather than spherical powder, which can be favorably used as the titanium fibers.

To form deposits of titanium fibers used in the first sintering step as described below, the titanium fibers can be mixed with a binder to deposit them in a wet process. However, from the viewpoint of easy formation of deposits and reduction of an impurity content of the titanium porous body, it is preferable to perform a dry deposition step of dry-depositing the titanium fibers and forming the deposits of titanium fibers. In the dry deposition step, the titanium fibers are deposited in a dry process, for example, by dropping them onto a molding surface of a mold in a gas such as air or in a vacuum. By performing the dry deposition step to suppress an increase in the impurity content, a highly pure titanium porous body is obtained, so that the electrical conductivity is further increased.

The first sintering step is then performed. In the first sintering step, for example, the deposits of the titanium fibers on the molding surface of the mold are placed in a furnace together with the mold and heated. Here, the deposits of the titanium fibers are heated in a vacuum atmosphere (for example, about 10⁻² Pa to 10⁻⁴ Pa) or an inert atmosphere such as argon at a temperature of 900°C or more for at least one hour. At this time, the titanium fibers in the deposits, which are relatively loosely deposited, are sintered at their contact points.

If the heating temperature in the first sintering step is too low, sintering will be insufficient or will not proceed. The heating temperature is preferably 950°C or more, and more preferably 1000°C or more, and can be, for example, 900°C to 1100°C. The heating time at that temperature is preferably 2 hours or more, and more preferably 3 hours or more, and can be, for example, 1 hour to 6 hours. Excessive oxynitriding of the titanium fibers can be prevented by setting an atmosphere during heating to a vacuum or an inert atmosphere. Here, the nitrogen atmosphere does not correspond to the inert atmosphere.

After the first sintering step, the warm rolling step is performed, thereby subjecting the titanium sintered body to warm rolling in a nitrogen atmosphere. By the warm rolling, the titanium sintered body obtained by sintering the titanium fibers to some extent in the first sintering step is crushed under warm conditions. At that time, it is believed that the number of contact points between the titanium fibers making up the titanium sintered body increases, or that the sintered areas (bonds between titanium fibers) formed in the first sintering step are expanded. By further heating the titanium sintered body after such warm rolling in the second sintering step as described below, sintering progresses at the contact points to increase the number of bonded portions between the titanium fibers, and large bonded portions are also formed. As a result, the electrical conductivity is increased and the electrical conductive property is improved without increasing the relative density of the porous titanium body so much.

The warm rolling step is performed in a nitrogen atmosphere. If an oxidizing atmosphere such as the air atmosphere is used, the titanium sintered body may be oxidized due to reaction with oxygen, and may burn in some cases. Furthermore, in the case of an inert atmosphere such as argon, oxidation can be prevented, but since the newly formed surface of titanium generated in the titanium sintered body by rolling is active, the titanium sintered body may stick to the rolling mill roll.

In the nitrogen atmosphere, the newly formed surface of the titanium sintered body is covered with a thin titanium nitride film. The formation of the titanium nitride film prevents the titanium sintered body from sticking to the rolling mill roll. Since the titanium nitride film is difficult to grow, the titanium sintered body does not contain excessive nitrogen. Furthermore, the titanium nitride film almost disappears as nitrogen diffuses into the titanium sintered body in a second sintering step as described below. Therefore, the nitrogen content of the titanium porous body does not increase so much.

Further, by using warm rolling rather than hot rolling or cold rolling, the plastic deformation of the titanium sintered body can progress smoothly without causing unintended further sintering, and the number of contact points between the titanium fibers can be increased. The warm rolling can be performed at a temperature higher than that of cold rolling where no heat is applied from the outside and at a temperature lower than that of hot rolling that causes recrystallization, more specifically from 200°C to 400°C, preferably from 250°C to 400°C.

Specifically, in the warm rolling, for example, the titanium sintered body is passed between a pair of rolling mill rolls to crush the titanium sintered body to reduce its thickness. The number of passes, which is the number of times the titanium sintered body is passed between rolling mill rolls, can be 2 to 5 times, and a rolling reduction in the warm rolling step can be 30% to 90%. The rolling reduction R is determined from a thickness T1 of the titanium sintered body before rolling and a thickness T2 of the titanium sintered body after rolling, using the equation: R = 100 × (T1 - T2) / T1.

The second sintering process is then performed on the titanium sintered body, and the contact areas of the titanium fibers increased in the warm rolling step are sintered to form large bonded portions between the titanium fibers.

The second sintering step can be performed under the same conditions as those described above for the first sintering step. However, the first sintering step and the second sintering step may be performed under different conditions. In the second sintering step, the atmosphere is a vacuum atmosphere (for example, about 10⁻² Pa to 10⁻⁴ Pa) or an inert atmosphere such as argon, and the heating temperature is 900°C or more, and preferably 950°C or more, and more preferably 1000°C or more, for example, from 900°C to 1100°C, and the heating time is 1 hour or more, and preferably 2 hours or more, and more preferably 3 hours or more, for example, 1 hour to 6 hours.

A titanium porous body can be produced by performing each step as described above.

### [Examples]

Next, the titanium porous body according to the present invention was experimentally carried out, and effects thereof were confirmed as described below.
However, descriptions herein are merely for illustration, and are not intended to be limited thereto.

Titanium fibers having each fiber thickness and each fiber length as shown in Table 1 were prepared. The Ti content of the titanium fibers was 99.3% by mass or more, and the Fe content was 0.25% by mass or less. It was also confirmed that the content of each of the inevitable impurities Ni, Cr, Al, Cu, Zn, and Sn was less than 0.10% by mass, and the total content of those impurities was less than 0.30% by mass.

In Comparative Examples 9 to 11 and Examples 1 to 8, deposits were formed in a dry deposition step using the titanium fibers, and the first sintering step, the warm rolling step, and the second sintering step were performed in this order under the conditions as shown in Table 1 to produce a porous titanium body. The conditions for the first sintering step and the second sintering step were the same, and each sintering step was carried out in a vacuum atmosphere in the range of 10⁻³ Pa to 10⁻² Pa.

In Comparative Examples 1 to 4, a cold rolling step at room temperature (R.T.) was used in place of the warm rolling step. In Comparative Examples 5 to 8, the temperature during rolling was 550°C, which was higher than that in the warm rolling step. In Comparative Examples 5 to 8, the temperature during rolling was higher, and in Comparative Example 11, the atmosphere for the warm rolling was an inert atmosphere of argon, so that, in both cases, the titanium sintered body stuck to the rolling mill rolls, and the rolling could not be continued, and any titanium porous body could not be produced. For these Comparative Examples, unlike Comparative Example 12, there is no description of "(First Sintering Step Only)" in the "First and Second Sintering Steps" column of Table 1 below, but these Comparative Examples could not perform the second sintering step. On the other hand, in Comparative Example 12, only the first sintering step was performed, and the second sintering step was intentionally not performed.

The oxygen content, the nitrogen content, and the carbon content of each of the titanium porous bodies according to Comparative Examples 1 to 4, 9, 10, and 12 and Examples 1 to 8 produced as described above were measured using the methods as described above, and these were as shown in Table 1. Further, the thickness, the relative density, the air resistance, and the electrical conductivity of each titanium porous body were measured using the methods as described above. The results are also shown in Table 1. It should be noted that the Ti content of each of the titanium porous bodies according to Examples 1 to 8 was 99.3% by mass or more.

**[Table 1]**

| | Titanium Fibers | | First and Second Sintering Step | | Rolling Step | | | | Titanium Porous Body | | | | | | |
|---|---|---|---|---|---|---|---|---|---|---|---|---|---|---|---|
| | Fiber Thickness | Fiber Length | Heating Time | Heating Temperature | Temperature | Atmosphere | Propriety of Rolling | Rolling Reduction | O Content | N Content | C Content | Thickness | Relative Density (-) | Air Resistance/Thickness (s/mm) | Conductivity/ Relative Density |
| | (µm) | (mm) | (hr) | (°C) | (°C) | | | (%) | (% by mass) | (% by mass) | (% by mass) | (mm) | | | (kS/cm) |
| Comp. 1 | 30 | 3 | 3 | 1000 | R.T. | N₂ | Yes | 85 | 0.34 | 0.03 | 0.04 | 0.3 | 0.30 | 8.3 | 5.4 |
| Comp. 2 | 30 | 3 | 3 | 1000 | R.T. | N₂ | Yes | 60 | 0.28 | 0.07 | 0.04 | 2.0 | 0.30 | 5.5 | 6.2 |
| Comp. 3 | 30 | 3 | 3 | 1000 | R.T. | N₂ | Yes | 55 | 0.27 | 0.05 | 0.06 | 0.3 | 0.10 | 2.1 | 7.1 |
| Comp. 4 | 30 | 3 | 3 | 1000 | R.T. | N₂ | Yes | 40 | 0.39 | 0.04 | 0.03 | 2.0 | 0.10 | 2.7 | 7.8 |
| Comp. 5 | 30 | 3 | 3 | 1000 | 550 | N₂ | No (Sticking) | 85 | - | - | - | - | - | - | - |
| Comp. 6 | 30 | 3 | 3 | 1000 | 550 | N₂ | No (Sticking) | 60 | - | - | - | - | - | - | - |
| Comp. 7 | 30 | 3 | 3 | 1000 | 550 | N₂ | No (Sticking) | 55 | - | - | - | - | - | - | - |
| Comp. 8 | 30 | 3 | 3 | 1000 | 550 | N₂ | No (Sticking) | 40 | - | - | - | - | - | - | - |
| Comp. 9 | 30 | 3 | 3 | 1000 | 250 | Air | Yes | 85 | 0.87 | 0.12 | 0.03 | 0.3 | 0.30 | 8.2 | 4.5 |
| Comp. 10 | 30 | 3 | 3 | 1000 | 400 | Air | Yes | 85 | 1.12 | 0.18 | 0.08 | 0.3 | 0.30 | 7.8 | 3.8 |
| Comp. 11 | 30 | 3 | 3 | 1000 | 400 | Ar | No (Sticking) | 85 | - | - | - | - | - | - | - |
| Comp. 12 | 30 | 3 | 3 (First Sintering Step Only) | 1000 (First Sintering Step Only) | 400 | N₂ | Yes | 85 | 0.37 | 0.08 | 0.03 | 0.3 | 0.30 | 6.8 | 2.4 |
| Ex. 1 | 30 | 3 | 3 | 1000 | 250 | N₂ | Yes | 85 | 032 | 0.09 | 0.04 | 0.3 | 0.30 | 7.7 | 8.6 |
| Ex. 2 | 30 | 3 | 3 | 1000 | 250 | N₂ | Yes | 60 | 0.31 | 0.11 | 0.07 | 2.0 | 0.30 | 3.8 | 8.1 |
| Ex. 3 | 30 | 3 | 3 | 1000 | 250 | N₂ | Yes | 55 | 0.38 | 0.08 | 0.04 | 0.3 | 0.10 | 2.4 | 13.4 |
| Ex. 4 | 30 | 3 | 3 | 1000 | 250 | N₂ | Yes | 40 | 0.28 | 0.07 | 0.09 | 2.0 | 0.10 | 2.2 | 14.1 |
| Ex. 5 | 30 | 3 | 3 | 1000 | 400 | N₂ | Yes | 85 | 0.34 | 0.09 | 0.08 | 0.3 | 0.30 | 7.6 | 10.4 |
| Ex. 6 | 30 | 3 | 3 | 1000 | 400 | N₂ | Yes | 60 | 0.41 | 0.12 | 0.07 | 2.0 | 0.30 | 4.5 | 11.1 |
| Ex. 7 | 30 | 3 | 3 | 1000 | 400 | N₂ | Yes | 55 | 0.31 | 0.12 | 0.06 | 0.3 | 0.10 | 2.5 | 18.4 |
| Ex. 8 | 30 | 3 | 3 | 1000 | 400 | N₂ | Yes | 40 | 0.42 | 0.08 | 0.05 | 2.0 | 0.10 | 3.4 | 17.4 |

All of the titanium porous bodies according to Examples 1 to 8 have a 300 mL air resistance/thickness of 8.0 s/mm or less, and an electrical conductivity/relative density of 8.0 kS/cm or more, and also have a good electrical conductive property, and good air permeability and liquid permeability. In particular, the titanium porous bodies according to Examples 2 to 4 and 6 to 8 have a 300 mL air resistance/thickness of 5.0 s/mm or less, and can be said to have even better air permeability and liquid permeability.

The titanium porous bodies according to Comparative Examples 1 to 4, 9, 10, and 12 had a lower conductivity/relative density of less than 8.0 kS/cm. Moreover, the titanium porous bodies according to Comparative Examples 1 and 9 had a 300 mL air resistance/thickness greater than 8.0 s/mm. In Comparative Examples 1 to 4, the rolling was performed at room temperature, so that the plastic deformation was insufficient, and the bonded portions between the titanium fibers would not become large and the electrical conductivity would not increase. In Comparative Examples 9 and 10, oxidation progressed because the warm rolling was performed in the air atmosphere, so that this would cause the conductivity to decrease. In Comparative Example 12, although the warm rolling was performed, the second sintering step was not performed, so that large bonded portions between the titanium fibers were not formed, resulting in the lower electrical conductivity. From the results of Comparative Example 12, it appears that bonds between the titanium fibers are rather destroyed during the warm rolling when focusing only on the warm rolling, and the bonds between the titanium fibers would be formed again by sintering after the warm rolling.

In view of the foregoing, it has been found that according to the present invention, a titanium porous body having a relatively high electrical conductive property and air permeability or liquid permeability can be obtained.

## Claims

1. A titanium porous body in a form of a sheet,
wherein the titanium porous body has a ratio of an electrical conductivity (kS/cm) to a relative density (-) of 8.0 kS/cm or more, and has a ratio of an air resistance (s) to a thickness (mm) of 8.0 s/mm or less.

2. The titanium porous body according to claim 1, wherein the titanium porous body has an oxygen content of 0.15% by mass to 0.50% by mass.

3. The titanium porous body according to claim 1 or 2, wherein the titanium porous body has a nitrogen content of 0.02% by mass to 0.15% by mass.

4. The titanium porous body according to any one of claims 1 to 3, wherein the titanium porous body has a thickness of 0.2 mm to 4.0 mm.

5. The titanium porous body according to any one of claims 1 to 4, wherein the titanium porous body has a relative density of 0.05 to 0.50.

6. A method for producing a titanium porous body in a form of a sheet, the method comprising:
a first sintering step of heating deposits of titanium fibers in a vacuum or an inert atmosphere at a temperature of 900°C or more for at least one hour to obtain a titanium sintered body;
a warm rolling step of subjecting the titanium sintered body to warm rolling in a nitrogen atmosphere; and
after the warm rolling step, a second sintering step of heating the titanium sintered body in a vacuum or an inert atmosphere at a temperature of 900°C or more for at least one hour.

7. The method for producing a titanium porous body according to claim 6, further comprising a dry deposition step of dry-depositing titanium fibers to form the deposits of the titanium fibers.

8. The method for producing a titanium porous body according to claim 6 or 7, wherein, in the warm rolling step, the titanium sintered body can be subjected to warm rolling at a temperature in a range of 200°C to 400°C.
